# EUROPÄISCHE PATENTSCHRIFT

(11) **EP 0 661 363 B1**
(45) Veröffentlichungstag und Bekanntmachung des Hinweises auf die Patenterteilung: **07.06.2000**
(21) Anmeldenummer: 94119985.3
(22) Anmeldetag: 16.12.1994
(51) Int. Cl.: C09D 163/00, C08G 71/04

(54) **Flüssige Zweikomponenten-Überzugsmittel**
Liquid two-component coatings
Revêtements liquides à deux composants

(30) Priorität: 24.12.1993 DE 4344510
(43) Veröffentlichungstag der Anmeldung: 05.07.1995
(73) Patentinhaber: HOECHST AKTIENGESELLSCHAFT, 65926 Frankfurt am Main (DE)
(72) Erfinder: Hönel, Michael, Dr., D-65189 Wiesbaden (DE); Pfeil, Armin, Dr., D-86916 Kaufering (DE); Budnick, Thomas, D-45326 Essen (DE); Schwan, Heiner, Dr., D-42369 Wuppertal (DE)
(74) Vertreter: Zounek, Nikolai, Dipl.-Ing.

(56) Entgegenhaltungen:
- EP-A- 0 272 665
- EP-A- 0 395 122
- EP-A- 0 523 610
- WO-A-93/21251
- US-A- 4 122 069

## Beschreibung

Die Erfindung betrifft flüssige Zweikomponenten-Überzugsmittel auf Basis von aminogruppenreaktiven Harzen, Polyaminhärtern und speziellen Aminourethanen. Die Überzugsmittel finden Anwendung beim Beschichten verschiedenster Gegenstände, insbesondere in der Industrie-, Fahrzeug- und Fahrzeugteilelackierung.

Aufgrund immer strenger werdender Umweltschutzauflagen gewinnen wäßrige Systeme zur Beschichtung von Gegenständen zunehmend an Bedeutung. Sie müssen sich in ihren Eigenschaften an konventionellen, d.h. Lösemittel-haltigen Systemen messen lassen. Dabei haben unter den kalthärtenden "Wasserlacken" wasserverdünnbare Epoxidharzsysteme an Bedeutung gewonnen. Diese 2K-Systeme weisen hervorragende Eigenschaften auf. Hervorzuheben sind folgende positive Eigenschaften: Kein oder nur geringer Lösemittelanteil, nicht feuergefährlich, keine oder nur geringe Geruchsbelästigung, leichte Verarbeitbarkeit, geringe Empfindlichkeit gegenüber feuchten Untergründen, gute Trocknung und schnelle Durchhärtung, exzellente Haftung auf den meisten Substraten, sehr gute Zwischenschichthaftung, guter Korrosionsschutz bei Metallen und leichte Reinigung der Arbeitsgeräte direkt nach Gebrauch.

So zeigen insbesondere nichtionisch dispergierte Epoxidharzsysteme, wie sie in DE-A 3 643 751 beschrieben sind, mit in EP-A 0 000 605 genannten wäßrigen Härtern auf Amin-Basis diese hervorragenden Eigenschaften, so daß sie als Beschichtungsmittel vielseitige Verwendung finden. Nachteilig an diesen Systemen ist allerdings, daß sie bei bestimmten Anwendungen keine störungsfreien Oberflächen erzeugen.

In EP-A 0 523 610 werden wäßrige Zweikomponentensysteme auf Epoxid/Amin-Basis beschrieben, die durch Zusatz wasserlöslicher oder wasserverdünnbarer Polyurethanharze den vorgenannten Nachteil überwinden und eine hohe Oberflächengüte erzielen. Diese Systeme sollen vorrangig in der Fahrzeugreparaturlackierung Anwendung finden. Der Nachteil dieser Überzüge, insbesondere Füller und Grundierungen, ist jedoch, daß sie nach kurzer Trocknungszeit eine unzureichende Schleifbarkeit aufweisen. In der Regel sind solche Systeme viel zu weich, das Schleifpapier setzt sich durch die ausgeprägte Thermoplastizität nach kurzer Zeit zu und die Oberfläche wird geschädigt.

In der EP-A 0 234 395 werden Aminourethanharze beschrieben, die erhalten werden durch Umsetzung von Carbonaten mit Verbindungen mit primären Aminogruppen und weiteren basischen Gruppen. Sie können durch Einbau z.B. teilverkappter Polyisocyanate selbsthärtend sein. Es ist jedoch auch möglich, den Aminourethanen einen für fremdvernetzende Lacke üblichen Härter zuzumischen, z.B. verkappte Polyisocyanate, β-Hydroxyester von mindestens bifunktionellen Polycarbonsäuren, Umesterungshärter oder Michael-Additionsprodukte. Bevorzugt werden die Aminourethane nach zumindest teilweiser Neutralisation als Harze für die Elektrotauchlackierung eingesetzt. Es wird nur sehr allgemein angedeutet, daß die Aminourethanharze auch in, vorzugsweise nichtwäßrigen, Epoxidharz enthaltenden Lacken eingesetzt werden können. Genauere Angaben zu Zusammensetzung, Verwendung und Eigenschaften dieser Lacke werden nicht gemacht.

Aufgabe der Erfindung ist die Bereitstellung von bei Raumtemperatur härtbaren polyaminvernetzenden Überzugsmitteln, welche eine sehr gute Oberflächenqualität aufweisen und welche nach kurzer Trocknungszeit naß oder trocken schleifbar sind und auch in dünnen Schichten eine gute Haftung zum Untergund zeigen.

Gegenstand der Erfindung sind bei Raumtemperatur härtbare Zwei-Komponenten-Überzugsmittel, enthaltend
(A) ein oder mehrere wasserverdünnbare oder wäßrig dispergierte filmbildende Epoxid-Harze,
(B) ein oder mehrere Polyaminhärter,
(C) ein oder mehrere Aminourethane, die Umsetzungsprodukte sind von
   (C1) oligomeren oder polymeren Verbindungen, welche mindestens eine, vorzugsweise zwei oder mehr endständige 2-Oxo-1,3-dioxolan-Gruppen enthalten, und
   (C2) Aminen, die mindestens eine primäre, vorzugsweise mehrere primäre und gegebenenfalls noch sekundäre und tertiäre Aminogruppen enthalten,
(D) gegebenenfalls Pigmente, Füllstoffe, Lösemittel, Wasser und übliche Additive, und wobei das Verhältnis der Anzahl von 2-Oxo-1,3-dioxolan-Gruppen zu der der primären Aminogruppen 1:1 bis 1:10, bevorzugt 1:1,05 bis 1:5, besonders bevorzugt 1:1,1 bis 1:2 beträgt.

Gegenstand der Erfindung sind dabei bevorzugt wäßrige Überzugsmittel, die wasserlösliche oder wasserverdünnbare Epoxidharze und wasserlösliche oder wasserverdünnbare Polyaminhärter enthalten.

Das Äquivalentverhältnis Polyaminhärter (B) : Aminourethan (C) liegt im allgemeinen bei 5:95 bis 95:5. Bevorzugt beträgt es 20:80 bis 80:20, besonders bevorzugt 30:70 bis 70:30.

Die Polyamine (C2) haben vorzugsweise die Formel 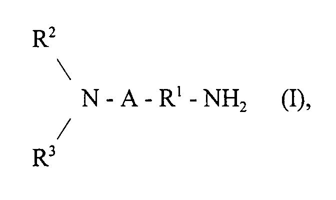 in der bedeuten
- R¹: einen zweiwertigen Kohlenwasserstoffrest, vorzugsweise einen geradkettigen oder verzweigten Alkylenrest mit 2 bis 18, vorzugsweise 2 bis 4 C-Atomen,
- R²: Wasserstoff, Alkyl mit 1 bis 8 C-Atomen, vorzgusweise 1 bis 4 C-Atomen oder Hydroxyalkyl mit 1 bis 8 C-Atomen, vorzugsweise 1 bis 2 C-Atomen im Alkylrest,
- R³: einen Rest aus der gleichen Gruppe wie R², wobei R² und R³ auch eine cyclische Ringverbindung, vorzugsweise einen 5-, 6- oder 7-gliedrigen aliphatischen Ring ergeben können
oder, wenn R² Wasserstoff ist, R³ außerdem auch eine Gruppe der Formeln

C₁ bis C₁₈-Alkyl-COO-CH₂-CH(OH)-CH₂-,

C₁ bis C₁₈-Alkyl-O-CH₂-CH(OH)-CH₂-,

NC-CH₂-CH₂-

oder

C₁ bis C₁₈-Alkyl-CHOH-CH₂-,
bedeuten kann und A eine chemische Bindung oder -(R¹-NH)ᵣ-R¹NH ist, worin r Null oder eine ganze Zahl von 1 bis 6 ist und R¹ die obige Bedeutung hat.

Als Beispiele für Polyamine sind zu nennen Polyalkylenamine, wie Äthylendiamin, Diäthylentriamin, Triäthylentetramin, Tetraäthylenpentamin, Pentaäthylenhexamin, Propylendiamin, Dipropylentriamin u.a., ferner 2,2,4- und/oder 2,4,4-Trimethylhexamethylendiamin, Bis-(3-aminopropyl)-amin, N,N-Bis(3-aminopropyl)-äthylendiamin, Neopentandiamin, 2-Methyl-1,5-pentandiamin, 1,3-Diaminopentan, Hexamethylendiamin u.a., sowie cycloaliphatische Amine wie 1,2- bzw. 1,3-Diaminocyclohexan, 1,4-Diamino-3,6-diäthylcyclohexan, 1,2-Diamino-4-äthylcyclohexan, 1,4-Bis-(3-aminopropyl)-piperazin, 1-Cyclohexyl-3,4-diaminocyclohexan, Isophorondiamin und Umsetzungsprodukte davon, 4,4'-Diaminodicyclohexylmethan und - propan, 2,2-Bis(4'-aminocyclohexyl)-methan und -propan, 3,3'-Dimethyl-4,4'-diaminodicyclohexylmethan, 3-Amino-1-cyclohexyl-aminopropan, 1,3- und 1,4-Bis-(aminomethyl)-cyclohexan.

Als araliphatische Amine werden insbesondere solche eingesetzt, bei denen aliphatische Aminogruppen vorhanden sind, z.B. meta- und para-Xylylendiamin oder deren Hydrierungsprodukte.

Als Polyamine kommen darüber hinaus auch Amin-Epoxid-Addukte in Frage, beispielsweise Umsetzungsprodukte von Polyaminen, wie z.B. Äthylendiamin, Propylendiamin, Hexamethylendiamin,2,2,4-,2,4,4-Trimethylhexamethylendiamin, meta-Xylylendiamin und/oder Bis-(aminomethyl)-cyclohexan mit endständigen Mono- oder Polyepoxiden, wie z.B. Propylenoxid, Hexenoxid, Cyclohexenoxid, oder mit Glycidyläthern wie Phenylglycidyläther, tert.-Butylglycidyläther, Äthylhexylglycidyläther, Butylglycidyläther oder mit Glycidylestern, wie dem von der Firma Shell vertriebenen Glycidylester der ®Versaticsäure, Cardura® E, oder den weiter unten (für (C1)) genannten Polyglycidyläthern und -estern in Betracht.

Es können auch neben den oben genannten Polyaminen wasserlösliche Polyoxyalkylendi-und -polyamine mit molaren Massen von 100 bis 2000 g/mol eingesetzt werden, z.B. die von der Firma Texaco unter dem Warenzeichen Jeffamine® vertriebenen Produkte, sowie die leicht in Wasser dispergierbaren Härtungsmittel, wie sie in der DE-A 23 32 177 und der EP-B 0 000 605 beschrieben sind, also z.B. modifizierte Amin-Addukte, um so die Hydrophilie und damit die Löslichkeit oder die Dispergierbarkeit der Aminourethane in Wasser oder wäßrigen Aminhärtern zu erhöhen.

Die genannten Amine (C2) können allein oder als Gemische verwendet werden. Auf alle Fälle sollte die Auswahl der Amine so erfolgen, daß im Endprodukt bevorzugt mindestens eine, besonders bevorzugt jedoch mehrere freie primäre Aminogruppen enthalten sind.

Die Verbindungen (C1) mit mindestens einer, vorzugweise mindestens zwei 2-Oxo-1,3-dioxolan-Gruppen (= cyclische Carbonatgruppen) werden durch Umsetzung von Kohlendioxid mit Epoxidverbindungen nach bekannter Art und Weise erhalten (siehe z.B. WO-84/03 701, DE-A 3 529 263 und DE-A 3 600 602). Vorzugsweise handelt es sich bei diesen Epoxidverbindungen um Polyglycidyläther auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die molaren Massen dieser Epoxidverbindungen geteilt durch die Anzahl an Epoxygruppen ("Epoxidäquivalentgewicht") liegen vorzugsweise zwischen 100 und 2000, insbesondere zwischen 100 und 350 g/mol.

Als mehrwertige Phenole sind beispielsweise zu nennen: ein- und mehrkernige mehrwertige Phenole, deren aromatische Reste annelliert sein können oder durch eine direkte Bindung oder Alkylen-, Äther-, Thioäther-, Carboxyl- oder Sulfogruppen verbunden sein können. Beispiele sind: Resorcin, Hydrochinon, 2,2-Bis-(4'-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan,4,4'-Dihydroxy-3,3'-dimethyldiphenylpropan,4,4'-Dihydroxydiphenyl, 4,4'-Dihydroxybenzophenon, Bis-(4'-hydroxyphenyl)-1,1-äthan, 2,2-Bis[4'-(2''-Hydroxypropoxy)phenyl]-propan,Bis-(4'-hydroxyphenyl)-1,1-isobutan, Bis-(4'-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)äther, Bis-(4-hydroxyphenyl)sulfon u. a. sowie die Halogenierungs- und Hydrierungsprodukte der vorstehend genannten Verbindungen. Bisphenol A ist hierbei besonders bevorzugt.

Als Beispiele für mehrwertige Alkohole seien Äthylenglykol, Diäthylenglykol, Triäthylenglykol, Polyäthylenglykole (n = 4 bis 35), 1,2-Propylenglykol, Polypropylenglykole (n = 2 bis 15), 1,3-Propylenglykol, 1,4-Butandiol, 1,5-Pentandiol, 1,6-Hexandiol, 1,2,6-Hexantriol, Glycerin, Neopentylglykol, Trimethyloläthan und Trimethylolpropan genannt. Polyäthylenglykole (n = 8 bis 10) sind hierbei besonders bevorzugt.

Die Umsetzung der Polyamine (C2) mit den cyclischen Carbonaten (C1) erfolgt im allgemeinen in den erforderlichen stöchiometrischen Verhältnissen nach üblichen Methoden bei erhöhten Temperaturen, gegebenenfalls unter Verwendung inerter Lösemittel. Die Umsetzung in Gegenwart von gegenüber der Cyclocarbonatgruppe inerten Lösungsmitteln stellt eine bevorzugte Verfahrensvariante dar. Bei der stöchiometrischen Bewertung der Ausgangsprodukte als auch der Endprodukte und zur Reaktionskontrolle werden die Aminzahl (Titration mit Perchlorsäure) und die Cyclocarbonat-Äquivalenzzahl (Titration mit Kaliumhydroxidlösung) zugrunde gelegt. Die Polyaminoverbindungen können einzeln oder als Gemische gleichzeitig oder zeitlich hintereinander eingesetzt: werden, gegebenenfalls gelöst in inerten Lösemitteln.

Es ist bei der Umsetzung darauf zu achten, daß solche Reaktions- und Verfahrensbedingungen eingehalten werden, unter denen die Cyclocarbonatgruppen der Komponente (C1) nur mit den primären Aminogruppen der anderen Komponente (C2) reagieren können. Nach bekannten Methoden ist das erreichbar, ohne daß auch entsprechende Reaktionen mit den evtl. vorhandenen sekundären Aminogruppen stattfinden, die deutlich reaktionsträger sind. Außerdem ist zu vermeiden, daß durch zu hohe Temperaturen aus Urethanstrukturen von Polyalkylenpolyaminen cyclische Harnstoffderivate gebildet werden.

Als inerte Lösemittel kommen bei dieser Reaktion z.B. aromatische Kohlenwasserstoffe in Frage wie Xylol und Toluol, Alkohole wie Butanole, Pentanole und Glycoläther wie Methoxyäthanol, Äthoxyäthanol, Methoxypropanol, Butoxyäthanol, Methoxybutanol, Glykoldimethyläther und Diglykoldimethyläther usw. in Frage. Bevorzugt sind solche Lösungsmittel zu wählen, welche sich nach erfolgter Reaktion leicht abdestillieren lassen oder später in der wäßrigen Formulierung nicht stören. Die Lösemittel sollten im letzteren Falle lediglich in einer Menge verwendet werden, die zur Erniedrigung der Viskosität auf ein handhabbares Maß ausreicht. Ester und Ketone sind aufgrund ihrer potentiellen Reaktivität gegenüber den Komponenten nur bedingt geeignet und im Einzelfall zu prüfen.

Die Reaktionstemperatur liegt im Bereich von 50 °C bis 150 °C, nach unten beschränkt durch Löslichkeit und Viskosität, nach oben durch die Neigung zu Neben- und Folgereaktionen sowie den Siedepunkt des Lösemittels. Bevorzugt arbeitet man zwischen 80 °C und 130 °C. Katalysatoren werden für diese Umsetzung nicht benötigt. So laufen Reaktionen zwischen Carbonaten und primären Aminen schon bei Raumtemperatur zügig ab; bei den beschriebenen Systemen sind allerdings höhere Temperaturen nötig, da die Produkte oft auch in Lösung eine hohe Viskosität aufweisen.

Die Mengenverhältnisse von (C1) und (C2) sind bevorzugt so zu wählen, daß aminofunktionelle Reaktionsprodukte gebildet werden, die über diese Funktionen mit aminogruppenreaktiven funktionellen Gruppen reagieren können bevorzugt mit den Glycidylgruppen eines Epoxidharzes. Vorzugsweise sind das primäre Aminogruppen, von denen mindestens eine, besser aber mehrere in einem Molekül des Aminourethans vorliegen sollten. Durch Variation des Mengenverhältnisses lassen sich Produkte von oligomerem bis hin zu polymerem Charakter gewinnen, wobei Oligomere besonders bevorzugt sind. Somit sind vorzugsweise Mengenverhältnisse zwischen Carbonat und Polyamin im Bereich von 1 mol Polyamin pro Mol Carbonat-Gruppen der Komponente einzusetzen.

Die auf diese Weise erhaltenen Aminourethane (C) können bevorzugt in Kombination mit üblichen wäßrigen Amin-Härtern (B) als Härter bzw. Modifizierungsmittel für wäßrige Epoxidharzsysteme eingesetzt werden. Solche Amin-Härtungsmittel, vorzugsweise für die Härtung bei Raumtemperatur und niedrigeren Temperaturen (Aminkalthärter), die allgemein im Äquivalentverhältnis Epoxidäquivalent zu Aminwasserstoffäquivalent von 1 : 0,75 bis 1 : 2,0 eingesetzt werden, sind sämtliche bereits oben genannten Amine oder Mannichbasen und Polyamidoamine, welche allein oder als Gemische verwendet werden können. Geeignete Mannich-Basen werden durch Kondensation von Polyaminen, vorzugsweise Diethylentriamin, Triethylentetramin, Isophorondiamin, 2,2,4- bzw. 2,4,4-Trimethylhexamethylendiamin, 1,3- und 1,4-Bis-(aminomethyl)-cyclohexan, insbesondere meta- und para-Xylylendiamin mit Aldehyden, vorzugsweise Formaldehyd und ein- oder mehrwertigen Phenolen mit mindestens einer gegenüber Aldehyden reaktiven Kernposition, beispielsweise den verschiedenen Kresolen und Xylenolen, para-tert.-Butylphenol, Resorcin, 4,4'-Dihydroxydiphenylmethan, 4',4''-Dihydroxy-diphenyl-2,2-propan, vorzugsweise aber Phenol hergestellt. Geeignete Polyamidoamine, werden beispielsweise durch Umsetzung von Polyaminen mit Mono- oder Polycarbonsäuren, z.B. dimerisierten Fettsäuren, erhalten.

Als Amin-Härter (B), die zusammen mit den Aminourethanen eingesetzt werden können, kommen insbesondere auch die Additionsprodukte aus Polyaminen und (Meth)Acrylsäurederivaten in Frage wie (Meth)acrylnitril, (Meth)acrylsäure und deren C₁-C₄-Alkylester, (Meth)acrylsäureamid. Additionsprodukte dieser Art sind in EP-A 0 000 605 beschrieben. Werden die Aminourethane zusammen mit diesen Additionsprodukten oder mit den oben genannten Amin-Härtern verwendet, kann es vorteilhaft sein, zusätzlich auch die in EP-A 0 000 605 bzw. DE 43 10 198 beschriebenen Emulgatoren mitzuverwenden. Diese Emulgatoren sind Addukte aus üblichen Polyepoxiden und Polyalkylenpolyätherpolyolen im Äquivalentverhältnis 2 : (0,1 bis 1,5). Die Mitverwendung dieses Emulgators ist immer dann vorteilhaft, wenn das zu härtende Bindemittelsystem ein wäßriges System ist. Bedingt durch das Äquivalentverhältnis wie oben angegeben, enthält der Emulgator noch freie Epoxidgruppen. Bei Mitverwendung solcher Emulgatoren reagiert diese Verbindung dabei mit dem Aminourethan bzw. mit den anderen Amin-Härtern.

Die Menge an Emulgator beträgt im allgemeinen 20 bis 80 Gew.-% der Gesamtmenge an Emulgator und sämtlichen Härtern als Feststoff gerechnet. Die Gesamtmenge an Härter beträgt entsprechend 80 bis 20 %, wobei das Verhältnis von Emulgator zu Härter so zu bemessen ist, daß in jedem Fall nach Abschluß der Reaktion zwischen Emulgator und Härter noch freie Aminogruppen, vorzugsweise primäre Aminogruppen vorhanden sind.

Die erfindungsgemäße Modifizierung flüssiger Zweikomponenten-Systeme, bevorzugt wäßriger Epoxid/Amin-Systeme mit den an sich bekannten Aminourethanen kann auf verschiedene Weise erfolgen. Ein erster Weg besteht darin, die Aminourethane als isolierte Verbindung entweder in Reinform oder in einem für die spätere wäßrige Formulierung geeigneten Lösemittel einzusetzen. Als Lösemittel geeignet sind dabei beispielsweise Monoalkohole, wie Benzylalkohol, Ätheralkohole, wie Methoxypropanol, Isopropoxypropanol, Glykole, wie Methylglykol, Butylglykol, Butyldiglykol.

Es kann so vorgegangen werden, daß das Aminourethanharz in Reinform, z.B. als Pulver, oder in Lösemittelform mit dem wäßrigen Aminhärter gemischt bzw. homogenisiert wird und diese Mischung der Epoxidharzkomponente zugesetzt wird. Es ist jedoch auch möglich, das Aminourethanharz dem fertigen Überzugsmittel separat zuzugeben. In geeigneter Form gelöst, kann das Aminourethan an beliebiger Stelle bei der Herstellung des Überzugsmittels zugegeben werden.

Ein zweiter Weg besteht darin, das Aminourethanharz und den wäßrigen Aminhärter chemisch zu verbinden und dieses Addukt als Aminkomponente der Epoxidharzkomponente zuzusetzen. Die chemische Verknüpfung von Aminourethan und Aminhärter wird dabei gegenüber der Mischung Aminourethan/Aminhärter bzw. der separaten Zugabe des Aminourethans bevorzugt. Vorzugsweise findet dieser zweite Weg Anwendung, wenn neben dem Aminourethan und weiteren üblichen wäßrigen Aminhärtern epoxidgruppenhaltige Emulgatoren der vorstehend beschriebenen Art in der Aminkomponente des 2K-Systems enthalten sind.

Dabei gibt es wiederum verschiedene Möglichkeiten der chemischen Verknüpfung von Aminourethan und Aminhärter.

So kann zum einen das Aminourethan mit den anderen Härtern vorgeschmischt werden und diese Mischung wird dann mit dem Emulgator chemisch umgesetzt. Eine zweite Variante besteht darin, daß man das Aminourethan mit dem Emulgator chemisch umsetzt und dann den zusätzlichen Aminhärter beimischt. In umgekehrter Weise kann man auch zunächst solche zusätzlichen Amine mit dem Emulgator chemisch umsetzen und dann das Aminourethan zumischen. Schließlich kann aber auch ein Amin- bzw. Aminhärter-Gemisch zuerst mit einem Unterschuß an 2-Oxo-1,3-dioxolan-Gruppenhaltigen Verbindungen, daraufhin mit einem Unterschuß Emulgator umgesetzt werden, oder diese zweistufige Umsetzung auch in umgekehrter Reihenfolge durchgeführt werden. Dabei ist immer darauf zu achten, daß im Endprodukt ausreichend freie, vorzugsweise primäre Aminogruppen übrigbleiben. Die erwähnten Reaktionen werden bevorzugt in Abwesenheit von Lösemitteln durchgeführt, doch kann es in Einzelfällen durchaus sinnvoll sein, in Anwesenheit von Lösemitteln zu arbeiten, insbesondere um die Viskosität auf einen günstigen Wert einzustellen. Die Reaktionstemperaturen liegen im allgemeinen bei 20 bis 90 °C. Die Mengenverhältnisse von Aminourethan-Härtern zu den üblichen Aminhärtern liegt im allgemeinen zwischen 95:5 und 5:95, bevorzugt zwischen 80:20 und 20:80, besonders bevorzugt zwischen 70:30 und 30:70. Die Werte gelten auch bei Mitverwendung des erwähnten Emulgators.

Als polyaminvernetzende Komponente (A) werden in den erfindungsgemäßen Überzugsmitteln Epoxidharze eingesetzt. Das können handelsübliche Di- oder Polyepoxide sein. Das sind filmbildende Epoxidharze, die als wäßrige Dispersion oder als wasserverdünnbares Harz vorliegen. Beispiele für solche Polyepoxide sind Polyglycidyläther auf Basis von aliphatischen oder aromatischen Diolen wie Bisphenol A, Bisphenol F oder Polyalkylenglykole, die im Handel üblich und dem Fachmann geläufig sind. Bevorzugt sind dabei modifizierte nichtionisch stabilisierte Epoxidharze auf Basis von aromatischen Diolen, wie sie beispielsweise in DE 36 43 751 beschrieben sind.

Das erfindungsgemäße Überzugsmittel besteht aus zwei unterschiedlichen Komponenten - der polyaminvernetzenden Komponente (A) und dem mit dem Aminourethanharz (C) modifizierten Polyaminhärter (B). Kurz vor der Applikation werden beide Komponenten vermischt, im Verhältnis Aminogruppen zu Epoxidharzen von 5:1 bis 1:5, bevorzugt von 1,5:1 bis 1:1,5. Dabei sind die Aminogruppen des Aminourethans mit zu berücksichtigen.

Das erfindungsgemäße Überzugsmittel kann auch übliche Pigmente und Füllstoffe, z.B. Titandioxid, Bariumsulfat, Aluminiumsilikat, Siliciumdioxid, Zinkphosphat, Ruß farbgebende und/oder transparente organische oder anorganische Pigmente, sowie übliche Hilfsstoffe enthalten. Beispiele für letztere sind Antikratermittel, Antischaummittel, Verlaufsmittel, Katalysatoren, Haftvermittler. Es können auch organische Lösemittel im Überzugsmittel vorhanden sein. Deren Anteil soll bevorzugt unter 10 Gew.-% betragen.

Die Pigmente und/oder Füllstoffe können entweder in der Epoxidharzkomponente oder in der Aminkomponente dispergiert werden. Bevorzugt ist die Dispergierung in der Aminkomponente.

Es ist vorteilhaft, wenn die erfindungsgemäßen Überzugsmittel zur Erzielung störungsfreier Oberflächen ein oder mehrere wasserverdünnbare oder wasserlösliche Polyurethanharze mit einem Zahlenmittel der Molmasse (Mn) von 500 - 500 000 g/mol enthalten. Das Polyurethanharz kann vorzugsweise zu 5-80 Gew.-%, bezogen auf den Harzfestkörper von Epoxidharz und Polyaminhärter, im Überzugsmittel enthalten sein. Dabei kann das Polyurethanharz in der Epoxidkomponente, der Polyaminkomponente oder in beiden Komponenten enthalten sein. Das wäßrige Polyurethanharz kann ionisch oder nichtionisch stabilisiert sein. Beispiele für derartige Polyurethanharze sind beschrieben in DE-A-41 23 860.

Ebenso ist es möglich, anstelle der Polyurethanharze zur Eigenschaftsverbesserung ein oder mehrere wasserlösliche oder wasserverdünnbare Acrylatharze zuzugeben. Derartige Polyacrylatharze haben beispielsweise eine zahlenmittlere Molmasse (Mn) von 500-200 000 g/mol. Es handelt sich bevorzugt um Acrylatcopolymere. Geeignet sind übliche wasserlösliche oder wasserverdünnbare Polyacrylatharze. Beispiele dafür sind beschrieben in EP-A 0 358 979.

Die Applikation der erfindungsgemäßen Überzugsmittel erfolgt nach üblichen Methoden wie Tauchen, Rollen, Streichen, Spritzen. Die Vernetzung kann bei Temperaturen von 20-120 °C erfolgen, bevorzugt sind jedoch Temperaturen unter 80 °C.

Nach dem Vernetzen erhält man homogen beschichtete Substrate mit glatten störungsfreien Oberflächen. Die erfindungsgemäßen Überzugsmittel zeigen im Vergleich zu bekannten wäßrigen Epoxid/Polyamin-Systemen eine deutliche Verminderung der Thermoplastizität, was zu einer erheblichen Verbesserung der Schleifbarkeit führt. Schon nach kurzer Trockenzeit sind die Überzüge naß und trocken schleifbar.

Ein weiterer Vorteil der erfindungsgemäßen Überzugsmittel besteht in der sehr guten Haftung auf dem Untergrund auch in dünnen Schichten und einer sehr guten Naßhaftung, z.B. auf Zink, Eisen, Stahl, Aluminium, glasfaserverstärkten Kunststoffen.

Das erfindungsgemäße Überzugsmittel kann zum Beschichten verschiedener Substrate, wie z.B. Metall, Kunststoff, Holz, Glas, mineralische Untergründe, verwendet werden. Eine bevorzugte Anwendung der Überzugsmittel liegt im Bereich der Fahrzeug- und Fahrzeugteilelackierung. Dabei werden die Überzugsmittel vorzugsweise als Füller- und/oder Grundierungsschichten appliziert.

Die folgenden Beispiele sollen die Erfindung näher erläutern.

### Beispiel 1

### Herstellung eines Aminourethans 1

916 g BDC (Umsetzungsprodukt des Diglycidyläthers von Bisphenol A mit Kohlendioxid bis zum vollständigen Verschwinden der Epoxidgruppen) werden mit 120 g Methylglykol auf 120 °C erwärmt und bei dieser Temperatur unter gutem Rühren gehalten. Zu der bald fast klaren Lösung werden zunächst bei 100 °C 103 g Diäthylentriamin (DETA) gegeben und bis zu einer Aminzahl von 39 mg KOH/g umgesetzt. Dann wird mit 120 g Äthylendiamin bis zu einer Aminzahl von 106 mg KOH/g umgesetzt. Nach Abdestillieren flüchtiger Verbindungen verbleiben 1176 g Produkt mit einer Aminzahl von 116 mg KOH/g und 22 % Restlösemittel.
Der Schmelzpunkt des Produktes liegt unter Raumtemperatur.

### Beispiel 2

### Herstellung eines Aminourethans 2

229 g BDC werden mit 120 g Methylglykol auf 120 °C erwärmt und bei dieser Temperatur unter gutem Rühren gehalten. Die so erhaltene Lösung wird mit 103 g DETA bis zu einer Aminzahl von 171 mg KOH/g umgesetzt. Nach Abdestillieren flüchtiger Verbindungen verbleiben 420 g Produkt mit einer Aminzahl von 203 mg KOH/g, 1,5 % Restlösemittel und einem Schmelzpunkt von 42 °C.

### Beispiel 3

### Herstellung eines chemisch integrierten Aminourethans 3

Eine Lösung von 229 g BDC in 95 g Butylglykol wird zuerst mit 25,8 g Diäthylentriamin bis zur Aminzahl 34 mg KOH/g umgesetzt, dann weiter umgesetzt mit 30 g Ethylendiamin bis zur Aminzahl 106 mg KOH/g. Man erhält 380 g Produkt mit Aminzahl 102 mg KOH/g, welches 25 % Butylglykol enthält und bei Raumtemperatur hochviskos ist.

131,6 g des erhaltenen Produktes werden mit 43,8 g Isophorondiamin und 35,2 g m-Xylylendiamin unter gutem Rühren auf 70 °C erwärmt. Die nun klare Mischung mit einer Aminzahl von 95 mg KOH/g wird mit 155,2 g eines epoxyfunktionellen Emulgators, wie er in DE 43 10 198 (Bsp. I.4) beschrieben ist, umgesetzt, wobei eine deutliche Exothermie auftritt. Die immer noch klare Mischung wird mit 59 g Wasser auf 80 % Festkörper eingestellt und weist eine Aminzahl von 166 mg KOH/g und eine Viskosität von ca. 28 000 mPas (25 °C) auf. Das Produkt enthält 7,8 % Butylglykol.

### Beispiel 4

### Herstellung eines Füllers 1

19 g eines Aminourethans 1 entsprechend Beispiel 1, 23 g eines handelsüblichen Polyamins (80 %ig in Wasser, Beckopox VEM 2133W der Fa. Hoechst AG) und 350 g vollentsalztes (VE-) Wasser werden gut miteinander vermischt. Zu der Mischung werden 13 g eines handelsüblichen Polyurethanverdickers und 1,3 g eines Korrosionsinhibitors gegeben und ebenfalls gut vermischt. In dieser Mischung werden folgende Pigmente und Füllstoffe in üblicher Weise dispergiert:
32 g Siliciumdioxid
114 g Bariumsulfat
95 g Aluminiumsilikat
104 g Titandioxid
5 g Eisenoxidgelb

Zu der erhaltenen Mischung werden 123 g einer handelsüblichen nichtionischen Polyurethan-Dispersion (Festkörper 40%, ZB 2081 UZ der Fa. DSM) gegeben und intensiv verrührt.

Kurz vor der Applikation werden 243 g eines handelsüblichen wäßrigen Epoxidharzes (50 %ig, ® Beckopox EP 384W der Fa. Hoechst AG) zugegeben und beide Komponenten intensiv durch Rühren vermischt.

### Beispiel 5

### Herstellung eines Füllers 2

27 g eines Aminourethans 2 entsprechend Beispiel 2, 25 g eines handelsüblichen Polyamins (80 %ig in Wasser, Beckopox VEM 2133W der Fa. Hoechst AG) und 336 g VE-Wasser werden gut miteinander vermischt. Zu der Mischung werden 13 g eines handelsüblichen Polyurethanverdickers und 1,3 g eines Korrosionsinhibitors gegeben und ebenfalls gut vermischt. In dieser Mischung werden folgende Pigmente und Füllstoffe in üblicher Weise dispergiert:
32 g Siliciumdioxid
114 g Bariumsulfat
95 g Aluminiumsilikat
104 g Titandioxid
5 g Eisenoxidgelb

Zu der so erhaltenen Polyaminkomponente werden kurz vor der Applikation 243 g eines handelsüblichen wäßrigen Epoxidharzes (50%ig, EP 384) zugegeben und beide Komponenten intensiv durch Rühren vermischt.

### Beispiel 6

### Herstellung eines Füllers 3

48,5 g eines Aminourethans 3 entsprechend Beispiel 3 und 350 g VE-Wasser werden gut miteinander vermischt. Zu der Mischung werden 13 g eines handelsüblichen Polyurethanverdickers und 1,3 g eines Korrosionsinhibitors gegeben und ebenfalls gut vermischt. In dieser Mischung werden folgende Pigmente und Füllstoffe in üblicher Weise dispergiert:
32 g Siliciumdioxid
114 g Bariumsulfat
95 g Aluminiumsilikat
104 g Titandioxid
5 g Eisenoxidgelb

Zu der so erhaltenen Polyaminkomponente werden kurz vor der Applikation 238 g eines handelsüblichen wäßrigen Epoxidharzes (50%ig, ®Beckopox EP 384 der Fa. Hoechst AG) zugegeben und beide Komponenten intensiv durch Rühren vermischt.

### Beispiel 7 (Vergleichsbeispiel)

### Herstellung eines Füllers 4

Die Herstellung der Polyaminkomponente erfolgt analog Beispiel 4, nur mit dem Unterschied, daß 37 g des handelsüblichen Polyaminhärters mit 334 g VE-Wasser, ohne Aminourethanzusatz, vermischt werden.

Als Epoxidkomponente werden kurz vor der Applikation 262 g eines handelsüblichen wäßrigen Epoxidharzes (50%ig, EP 384) zugegeben und beide Komponenten intensiv durch Rühren vermischt.

### Beispiel 8

### Herstellung eines Primers 1

15 g eines Aminourethans 1 entsprechend Beispiel 1, 283 g VE-Wasser und 46 g eines handelsüblichen Polyamins (80%ig in Wasser, VEH 2133) werden gut miteinander vermischt. Zu der Mischung werden 7 g eines handelsüblichen Polyurethanverdickers und 10 g eines handelsüblichen Trockenstoffes gegeben und ebenfalls gut vermischt. In dieser Mischung werden folgende Pigmente und Füllstoffe in üblicher Weise dispergiert:
10 g Kieselsäure
70 g eines zinkhaltigen Korrosionsschutzpigmentes
30 g CaCO₃
78 g Talkum
60 g Eisenoxidgelb

Kurz vor der Applikation werden 390 g eines handelsüblichen wäßrigen Epoxidharzes (VEP 2385, 57%ig) zugegeben und beide Komponenten intensiv durch Rühren vermischt.

### Beispiel 9

### Herstellung eines Primers 2

Es wird analog Beispiel 8 gearbeitet, mit dem Unterschied, daß 57 g des handelsüblichen Polyamins und 280 g VE-Wasser, ohne Aminourethanzusatz, miteinander vermischt werden. Als Epoxidkomponente werden kurz vor der Applikation 399 g eines handelsüblichen Epoxidharzes (® Beckopox VEP 2385 der Fa. Hoechst AG, 57%ig) zugegeben und beide Komponenten intensiv miteinander vermischt.

### Applikation der Überzugsmittel

Die Füller-Überzugsmittel werden jeweils auf mit Kataphoresegrundierung vorbeschichtete Stahlsubstrate aufgespritzt und 1/2 Stunde bei 60 °C getrocknet.

Die Primer-Überzugsmittel werden jeweils auf Stahl-, Zink- und Aluminiumsubstrate appliziert und 15 Minuten bei 20 °C getrocknet.

Die Eigenschaften der erhaltenen Überzüge sind in der folgenden Tabelle zusammengefaßt:

| | **Füller 1** | **Füller 2** | **Füller 3** | **Füller 4** (Vergleich) | **Primer 1** | **Primer 2** (Vergleich) |
|---|---|---|---|---|---|---|
| Schichtdicke in µm | 30/130 | 30/130 | 30/130 | 30/60 | | |
| Naßschliff | ++/++ | ++/++ | ++/++ | +/- | | |
| Trockenschliff | ++/++ | ++/++ | ++/++ | +/- | | |

| Haftung auf: | | | | | | |
|---|---|---|---|---|---|---|
| Stahl | | | | | + | + |
| Zink | | | | | + | - |
| Aluminium | | | | | + | - |
| GfK | | | | | + | - |

| | | | | | | |
|---|---|---|---|---|---|---|
| + + sehr gut | | | | | | |
| * gut | | | | | | |
| - schlecht | | | | | | |
| -- sehr schlecht | | | | | | |
| GfK: Glasfaser-verstärkter Kunststoff | | | | | | |

## Patentansprüche

1. Überzugsmittel, enthaltend
A) ein oder mehrere wasserverdünnbare oder wäßrig dispergierte filmbildende Epoxid-Harze,
B) ein oder mehrere Polyaminhärter,
C) ein oder mehrere Aminourethane, die Umsetzungsprodukte sind von
C1) oligomeren oder polymeren Verbindungen, welche mindestens eine endständige 2-Oxo-1,3-dioxolan-Gruppe (cyclische Carbonatgruppen) enthalten, und
C2) Aminen, die mindestens eine primäre und gegebenenfalls noch sekundäre und tertiäre Aminogruppen enthalten,
wobei die Äquivalentverhältnisse C1): C2) 1:1 bis 1:10 betragen, und
D) gegebenenfalls Pigmente, Füllstoffe, ein oder mehrere organische Lösemittel, Wasser und übliche Additive.

2. Überzugsmittel nach Anspruch 1, wobei im Endprodukt C) eine oder mehrere freie primäre Aminogruppen enthalten sind.

3. Überzugsmittel nach Anspruch 1 oder 2, dadurch gekennzeichnet, daß Polyaminhärter B) und Aminourethan C) im Äquivalentverhältnis Polyaminhärter : Aminourethan von 5:95 bis 95:5 vorliegen.

4. Überzugsmittel nach einem der Ansprüche 1 bis 3, dadurch gekennzeichnet, daß Polyaminhärter B) und Aminourethan C) im Äquivalentverhältnis Polyaminhärter : Aminourethan von 20:80 bis 80:20 vorliegen.

5. Überzugsmittel nach einem der Ansprüche 1 bis 4, dadurch gekennzeichnet, daß Polyaminhärter B) und Aminourethan C) als Mischung enthalten sind.

6. Überzugsmittel nach einem der Ansprüche 1 bis 5, dadurch gekennzeichnet, daß Aminourethan C) in den Polyaminhärter B) chemisch eingebaut ist.

7. Überzugsmittel nach einem der Ansprüche 1 bis 6, dadurch gekennzeichnet, daß ein oder mehrere wasserverdünnbare oder wasserlösliche Polyurethanharze mit einem Zahlenmittel der Molmasse (Mn) von 500 - 500000 g/mol enthalten sind.

8. Verfahren zur Herstellung eines bei Raumtemperatur vernetzbaren Überzuges, dadurch gekennzeichnet, daß auf ein gegebenenfalls vorbeschichtetes Substrat eine Überzugsschicht nach Anspruch 1 aufgebracht wird, nachfolgend gegebenenfalls weitere Überzugsschichten aufgebracht werden und die Überzugsschichten gehärtet werden, wobei die Überzugsschichten einzeln oder gemeinsam gehärtet werden können.

9. Verfahren nach Anspruch 8, dadurch gekennzeichnet, daß die in der Überzugsschicht enthaltenen Polyaminhärter B) und Aminourethane C) als Mischung vorliegen.

10. Verfahren nach Anspruch 8, dadurch gekennzeichnet, daß die Aminourethane C) in die Polyaminhärter B) chemisch eingebaut sind.

11. Verfahren nach einem der Ansprüche 8 bis 10, dadurch gekennzeichnet, daß das Äquivalentverhältnis Polyaminhärter B): Aminourethan C) 5:95 bis 95:5 beträgt.

12. Verfahren nach einem der Ansprüche 8 bis 11, dadurch gekennzeichnet, daß im Überzugsmittel ein oder mehrere wasserverdünnbare oder wasserlösliche Polyurethanharze mit einem Zahlenmittel der Molmasse (Mn) von 500 - 500 000 g/mol enthalten sind.

13. Verwendung der Überzugsmittel nach einem der Ansprüche 1 bis 7 zur Herstellung von Mehrschichtüberzügen in der Fahrzeug- und Fahrzeugteilelackierung.

14. Verwendung der Überzugsmittel nach einem der Ansprüche 1 bis 7 zur Herstellung von Füller- und/oder Grundierungsschichten.

## Claims

1. A coating composition comprising
A) one or more water-dilutable or aqueously dispersed film-forming epoxy resins,
B) one or more polyamine curing agents,
C) one or more aminourethanes which are reaction products of
C1) oligomeric or polymeric compounds which contain at least one terminal 2-oxo-1,3-dioxolane group (cyclic carbonate group), and
C2) amines containing at least one primary and, if desired, also secondary and tertiary amino groups,
the ratios of equivalents of C1) : C2) being from 1:1 to 1:10, and
D) if desired, pigments, fillers, one or more organic solvents, water and conventional additives.

2. A coating composition as claimed in claim 1, the end product C) containing one or more free primary amino groups.

3. A coating composition as claimed in claim 1 or 2, wherein polyamine curing agent B) and amino-urethane C) are present in a ratio of equivalents of polyamine curing agent: aminourethane of from 5:95 to 95:5.

4. A coating composition as claimed in any one of claims 1 to 3, wherein polyamine curing agent B) and aminourethane C) are present in a ratio of equivalents of polyamine curing agent: aminourethane of from 20:80 to 80:20.

5. A coating composition as claimed in any one of claims 1 to 4, wherein polyamine curing agent B) and aminourethane C) are present as a mixture.

6. A coating composition as claimed in any one of claims 1 to 5, wherein aminourethane C) is chemically incorporated into the polyamine curing agent B).

7. A coating composition as claimed in any one of claims 1 to 6, wherein one or more water-dilutable or water-soluble polyurethane resins having a number-average molecular mass (Mₙ) of 500-500,000 g/mol are present.

8. A process for the production of a coating which is crosslinkable at room temperature, which comprises applying a coating layer as claimed in claim 1 to an untreated or precoated substrate, then if desired applying further coating layers, and curing the coating layers, it being possible to cure the coating layers individually or together.

9. The process as claimed in claim 8, wherein the polyamine curing agents B) and aminourethanes C) contained in the coating layer are present as a mixture.

10. The process as claimed in claim 8, wherein the aminourethanes C) are chemically incorporated into the polyamine curing agents B).

11. The process as claimed in any one of claims 8 to 10, wherein the ratio of equivalents of polyamine curing agent B): aminourethane C) is from 5:95 to 95:5.

12. The process as claimed in any one of claims 8 to 11, wherein the coating composition comprises one or more water-dilutable or water-soluble polyurethane resins having a number-average molecular mass (Mₙ) of 500-500,000 g/mol.

13. The use of a coating composition as claimed in any one of claims 1 to 7 for the production of multicoat systems in automotive finishing and the coating of automotive components.

14. The use of a coating composition as claimed in any one of claims 1 to 7 for the production of filler coats and/or primer coats.

## Revendications

1. Revêtement, contenant
A) une ou plusieurs résines époxyde filmogènes diluables à l'eau ou dispersées en solution aqueuse,
B) un ou plusieurs durcisseurs polyamine,
C) un ou plusieurs amino-uréthannes, qui sont des produits de réaction
C1) de composés oligomères ou polymères, qui contiennent au moins un groupe terminal 2-oxo-1,3-dioxolane (groupe carbonate cyclique), et
C2) d'amines qui contiennent au moins un groupe amine primaire, et éventuellement encore des groupes amine secondaires et tertiaires, dans lesquels les rapports équivalents C1) : C2) s'élèvent de 1 : 1 à 1 : 10, et
D) éventuellement des pigments, des charges, un ou plusieurs solvants organiques, de l'eau et des additifs usuels.

2. Revêtement selon la revendication 1, dans lequel le produit final (C) contient un ou plusieurs groupes amino primaires libres.

3. Revêtement selon la revendication 1 ou 2, caractérisé en ce que, le durcisseur polyamine B) et l'amino-uréthanne C) sont présents dans le rapport équivalent durcisseur polyamine : amino-uréthanne de 5 : 95 à 95 : 5.

4. Revêtement selon l'une des revendications 1 à 3, caractérisé en ce que, le durcisseur polyamine B) et l'amino-uréthanne C) sont présents dans le rapport équivalent durcisseur polyamine : amino-uréthanne de 20 : 80 à 80 : 20.

5. Revêtement selon l'une des revendications 1 à 4, caractérisé en ce que, le durcisseur polyamine B) et l'amino-uréthanne C) sont contenus sous la forme de mélange.

6. Revêtement selon l'une des revendications 1 à 5, caractérisé en ce que l'amino-uréthanne C) est inséré chimiquement dans le durcisseur polyamine B).

7. Revêtement selon l'une des revendications 1 à 6, caractérisé en ce qu'il contient une ou plusieurs résines polyuréthanne diluables à l'eau ou hydrosolubles ayant une masse molaire moyenne en nombre (Mn) de 500 à 500000 g/mol.

8. Procédé pour la préparation d'un revêtement réticulable à température ambiante, caractérisé en ce que, l'on dépose sur un substrat éventuellement préenduit une couche de revêtement selon la revendication 1, on dépose ensuite éventuellement d'autres couches de revêtement et on durcit les couches de revêtement, dans lequel les couches de revêtement peuvent être durcies séparément ou ensemble.

9. Procédé selon la revendication 8, caractérisé en ce que les durcisseurs polyamine B) et les amino-uréthannes C) contenus dans la couche de revêtement se présentent sous forme de mélange.

10. Procédé selon la revendication 8, caractérisé en ce que les amino-uréthannes C) sont insérés chimiquement dans les durcisseurs polyamine B).

11. Procédé selon l'une des revendications 8 à 10, caractérisé en ce que le rapport des équivalents durcisseur polyamine B) : amino-uréthanne C) s'élève à 5 : 95 à 95 : 5.

12. Procédé selon l'une des revendications 8 à 11, caractérisé en ce que le revêtement contient une ou plusieurs résines polyuréthanne diluables à l'eau ou hydrosolubles ayant une masse moléculaire moyenne en nombre (Mn) de 500 à 500 000 g/mol.

13. Utilisation du revêtement selon l'une des revendications 1 à 7 pour la préparation de revêtements multicouches dans la peinture des véhicules et des pièces de véhicules.

14. Utilisation du revêtement selon l'une des revendications 1 à 7 pour la préparation de couches de filler et/ou de base.
